**Europäisches Patentamt**

**European Patent Office**

**Office européen des brevets**

(19)

(11) Publication number : **0 156 844 B2**

(12)                **NEW EUROPEAN PATENT SPECIFICATION**

(45) Date of publication of the new patent specification : **22.07.92 Bulletin 92/30**

(51) Int. Cl.⁵ : **G11B 5/41,** G11B 23/03

(21) Application number : **84903447.5**

(22) Date of filing : **19.09.84**

(86) International application number :
**PCT/GB84/00318**

(87) International publication number :
**WO 85/01378 28.03.85 Gazette 85/08**

(54) **MICROFLOPPY DISC DRIVE HEAD CLEANER.**

(30) Priority : **19.09.83 GB 8325040**

(43) Date of publication of application :
**09.10.85 Bulletin 85/41**

(45) Publication of the grant of the patent :
**03.08.88 Bulletin 88/31**

(45) Mention of the opposition decision :
**22.07.92 Bulletin 92/30**

(84) Designated Contracting States :
**BE CH DE FR LI NL SE**

(56) References cited :
**EP-A- 0 056 317**
**EP-A- 0 056 720**

(56) References cited :
**FR-A- 2 271 632**
**FR-A- 2 451 611**
**GB-A- 2 082 372**
**US-A- 4 291 353**

(73) Proprietor : **AUTOMATION FACILITIES LIMITED**
**Blakes Road**
**Wargrave, Berkshire RG10 8AW (GB)**

(72) Inventor : **KINGSBURY, Philip, Charles, Orlando**
**The Old Farm House Stoke Row**
**Henley-on-Thames**
**Oxfordshire RG9 5QG (GB)**

(74) Representative : **Abnett, Richard Charles et al**
**REDDIE & GROSE 16 Theobalds Road**
**London WC1X 8PL (GB)**

EP 0 156 844 B2

## Description

The present invention relates to the cleaning of the read/write heads in drives for microfloppy disc cartridges.

Floppy discs are well known for use as magnetic stores for computers, word processors and the like. A floppy disc comprises a disc of a magnetisable polyester-based material which can be rotated at high speed, by apparatus known as a disc drive. Data can be written onto or read from the magnetisable material by an appropriate magnetic head in the disc drive.

The floppy discs are prone to malfunction if they become dirty or dusty and for this reason they are sealed in a protective shell or sleeve. Several disc sizes have been proposed. One proposal uses a 3½ inch (8.89 cm) disc, sealed in a rigid, protective shell which has apertures to allow a magnetic head to have access to one or both sides of the disc, and an aperture to allow a drive mechanism to rotate the disc. On both sides of the disc, a liner of lint-free material between the disc and the shell keeps the disc clean. The unit comprising the liner and disc sealed inside the shell is known as a cartridge.

The magnetic heads also accumulate dirt, oxide particles and other contamination which adversely affects their accuracy in use, and reduces their life. Accordingly, it is desirable to keep the heads clean.

For the purposes of cleaning floppy disc drive heads of earlier larger formats we have previously proposed in EP-A-0 056 720 a floppy disc which has one edge open to allow a cleaning disc to be wetted outside the jacket, inserted into the jacket for cleaning the heads, and removed from the jacket when contaminated by residues from the heads. Such a jacket is however quite different from a rigid microfloppy shell, and relies on the flexibility of the jacket material to permit the jacket to be opened in the manner of an envelope for insertion and removal of the cleaning disc. We have appreciated that such an arrangement is quite impracticable for use with rigid microfloppy shells which do not have the same degree of flexibility unless made of a material which does not comply with the standard characteristics laid down for such shells.

It has also been proposed in FR-A-2 271 632 to provide a rigid carrying case for a standard phonograph record in the form of a container comprising two square rigid moulded panels hinged together along one edge to permit the container to be opened and closed in the manner of a lady's powder compact. Such a container does not provide for rotation of the record when within the container and indeed is provided with radial ribs which would make such rotation impossible without danger of damage to the article contained in it. Such a container would be totally unsuitable for use in the field of microfloppy discs.

The object of the present invention is to provide an improved method of and apparatus for cleaning microfloppy disc drive heads.

The present invention provides apparatus for cleaning microfloppy disc drive heads comprising two leaves of material pivotally hinged to form an openable shel, and a replaceable disc of cleaning material sandwiched between the leaves, at least one leaf having an aperture through which a disc drive head may contact a said cleaning disc when the shell containing the cleaning disc is inserted into the disc drive, characterised in that the shell is openable about the hinge and in that releasable fastening means are provided on inner surfaces of the shell, adjacent the perimeter of the shell and outside the area of the cleaning disc, for fastening the shell in a closed position.

The present invention further provides a method of cleaning microfloppy disc drive heads in which a replaceable disc of cleaning material is sandwiched between two leaves of material which are pivotally hinged to form shell, and the shell containing the disc is inserted into a disc drive, whereby the disc may clean the drive head through an aperture in one of the leaves, characterised in that the shell is openable about the hinge and in that releasable fastening means are provided on the inner surfaces of the shell, adjacent the perimeter of the shell and outside the area of the cleaning disc, for fastening the shell in a closed position.

Commencing with a description of a standard floppy disc cartridge, the invention will now be described by way of example, with reference to the accompanying drawings in which:

Figure 1 shows the under-side of a standard 3½ inch floppy disc cartridge; and

Figure 2 shows a protective shell of a leaved cartridge embodying the invention.

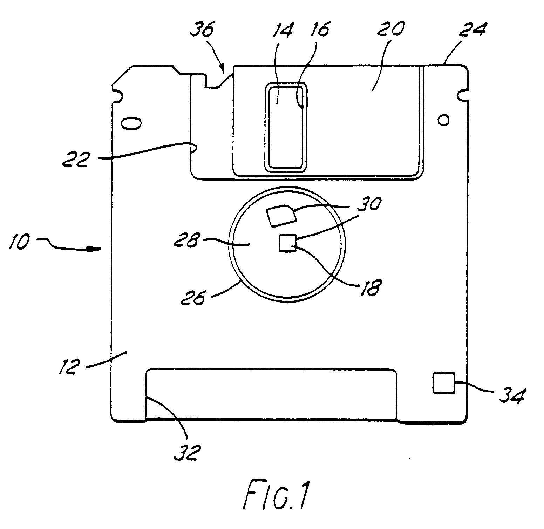

Figure 1 shows a cartridge 10 for a 3½ inch (8.89cm) microfloppy disc. The sleeve or shell 12 of the cartridge 10 is generally square and is formed of two portions permanently sealed together to prevent the ingress of dirt. The magnetic disc 14 housed within the shell 12 is visible in Figure 1 through an opening or access window 16 in the shell. The opening 16 extends generally along a radius of the disc 14 which is centred at 18. A shutter 20 is movable within a depression 22 in the region of the opening 16 to open and close the opening 16. The shutter 20 is spring biased to a position in which the opening 16 is closed and dust is prevented from entering the cartridge. Means are provided in the disc drive for opening the shutter 20 when the cartridge is inserted, so that a magnetic head can read from or write on the disc 14. A second opening, aligned with the opening 16 and not visible in Figure 1, allows access to the other surface of the disc 16, and the second opening is also protected by the shutter 20 which extends around the edge 24 of the shell 12.

A central opening 26 in the shell 12 receives a central, metal hub 28 of the disc 16. Two holes 30 in the hub 28 allow the disc 16 to be driven about its centre 18.

A depression 32 in the shell 12 is provided for receiving a label. Other apertures in the shell and features of the shell outline are provided for various control functions. For instance, an aperture 34 is provided for cooperation with a mechanism in the disc drive to prevent data being written onto the disc 14 unless a plug is present in the aperture 34. A register notch 36 enables the disc drive to be disabled until the cartridge 10 has been inserted with the correct orientation.

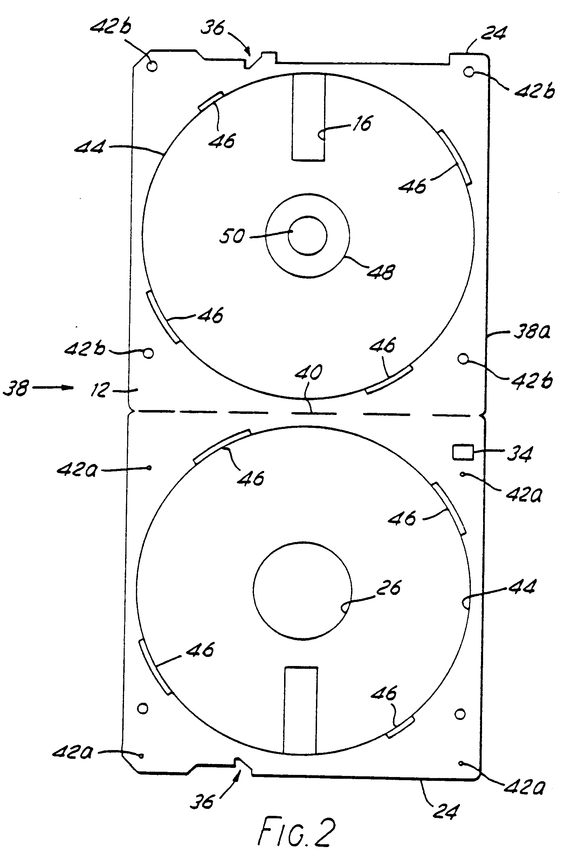

Figure 2 shows the inside of a shell 38 according to the present invention. Features common to the cartridge 10 of Figure 1 and the shell 38 of Figure 2 are indicated by like numerals. The shell 38 comprises two leaves 38a, 38b hinged together along a line 40. The leaves 38a, 38b fold from the open position shown in Figure 2 to a closed position in which they form a shell with outside dimensions identical to those of the shell 12 (Figure 1). Releasable fastening means are provided at four points around the perimeter of the shell 12, for the purpose of fastening the shell in its closed position. Each fastening means comprises on one leaf 38b a stud 42a and at a corresponding position on the other leaf 38a a resilient collar 42b into which the stud 42a can be pushed, and which thereafter grips the stud 42a.

Although fastening means are shown at four points around the shell perimeter, clearly such means may be provided at a greater or smaller number of points. Furthermore, releasable fastening means of types other than that described may be used. For instance, adhesive fastening devices could be used.

Each leaf 38a, 38b defines a disc receiving recess 44 and disc retaining surfaces 46 around the recess 44. At the centre of the leaf 38 is a circular rim 48 over which a disc hub, which is cup shaped, may fit and a low friction pad 50 which members of the disc drive abut through the holes 30 in the disc hub 28 (see Figure 1). Because the shell is intended to be opened, by hinging along the line 40, no shutter is provided over the openings 16. The absence of a shutter does not adversely affect operation of the disc drive.

For cleaning the heads of drive apparatus, cleaning discs are used in the shell 38. The cleaning discs have the same dimensions as the standard magnetic disc 16 used in the cartridge of Figure 1, but use a disc of lint-free cleaning material mounted on a hub, rather than a disc of magnetic material. A new cleaning disc is placed in a recess 44 of one leaf, and the shell is closed and fastened, using the fastening means 42a, 42b, to form a cleaning cartridge which can be used in a disc drive. Cleaning fluid is preferably applied to the disc before the shell 38 is closed.

When the disc drive is operated with a cleaning cartridge inserted, the cleaning disc rotates at the normal speed of a magnetic disc, lightly rubbing the magnetic heads and applying cleaning fluid to them. The heads are thereby cleaned, whereafter the cleaning cartridge is removed from the disc drive, the shell 38 is opened, and the soiled cleaning disc is removed from the shell and discarded.

When the head again needs cleaning, a new cleaning disc can be used. Therefore, a single shell 38 and a plurality of cleaning discs, by virtue of the opening facility of the shell 38, enables the head to be cleaned with a fresh cleaning disc on each occasion.

The cleaning discs may be made from the DuPont polyester material Reemay 2024 or 2032 (Reemay is a Registered Trade Mark). Preferably, the discs are not attached to the hub by means of adhesive, which could give rise to problems if a cleaning fluid was used which contained a solvent for the adhesive. Instead, teeth can be punched in the metal hub, for instance by cutting along two sides of a triangular region of the hub and pushing the region out of the plane of the hub to form a triangular tooth. The cleaning disc is impaled on a set of teeth which are then pushed back into the plane of the disc to hold the disc firmly.

Examples of suitable materials for the hub are half hard aluminium, annealed Duralumin (Registered Trade Mark), steel, plated steel (for instance tin plated steel), acetal resin and polysulphone.

Preferably the hinging between the two leaves of the shell 38 is integral with the leaves. The material of the shell must then be able to withstand repeated folding. Arbitrarily, a lifetime of 50 folding operations may be set as a requirement of the material, as a compromise between the economy of repeatedly using the shell and the higher cost of materials with a long lifetime. Examples of suitable materials for the shell are virgin or talc-filled polypropylene, acrylonitrite butadiene styrene (ABS), nylon, acetal resin and high impact polystyrene.

**Claims**

1. Apparatus for cleaning microfloppy disc drive heads comprising two leaves (38a, 38b) of material pivotally hinged to form a shell (38) and a replaceable disc of cleaning material sandwiched between the leaves, at least one leaf having an aperture (16) through which a disc drive head may contact a said cleaning disc when the shell containing the cleaning disc is inserted into the disc drive, characterised in that the shell is openable about the hinge (40) and in that releasable fastening means (42a, 42b) are provided on inner surfaces of the shell, adjacent the perimeter of the shell and outside the area of the cleaning disc, for fastening the shell in a closed position.

2. Apparatus according to claim 1, characterised in that the leaves (38a, 38b) and hinge (40) of the shell are integral.

3. Apparatus as claimed in claim 1 or 2, characterised in that the releasable fastening means comprises on one leaf a stud (42a) and on the other leaf a co-operating resilient collar (42b).

4. Apparatus as claimed in claim 1, 2, or 3, characterised in that said releasable fastening means are provided at four points around the perimeter of the shell.

5. A method of cleaning microfloppy disc drive heads in which a replaceable disc of cleaning material is sandwiched between two leaves of material which are pivotally hinged to form a shell, and the shell containing the disc is inserted into a disc drive, whereby the disc may clean the drive head through an aperture in one of the leaves characterised in that the shell is openable about the hinge and in that releasable fastening means are provided on inner surfaces of the shell, adjacent the perimeter of the shell and outside the area of the cleaning disc, for fastening the shell in a closed position.


**Patentansprüche**

1. Reinigungsvorrichtung für Antriebsköpfe von flexiblen Mikroplatten, aufweisend zwei Flügel (38a,38b) aus einem Werkstoff, die zur Ausbildung einer Hülle (38) schwenkbar angelenkt sind, und eine austauschbare Platte aus reinigendem Material, die sandwichartig zwischen die Flügel gelegt ist, wobei zumindest ein Flügel eine Öffnung (16) aufweist, durch die ein Kopf des Plattenantriebs eine solche reinigende Platte kontaktieren kann, wenn die die reinigende Platte enthaltende Hülle in den Plattenantrieb eingeschoben ist, dadurch gekennzeichnet, daß die Hülle über das Gelenk (40) zu öffnen ist und daß auf Innenflächen der Hülle an den Umfang der Hülle angrenzend und außerhalb des Bereichs der Reinigungsplatte lösbare Schließeinrichtungen (42a, 42b) zum Sichern der Hülle in einer geschlossenen Stellung vorhanden sind.

2. Vorrichtung nach Anspruch 1, dadurch gekennzeichnet, daß die Flügel (38a, 38b) und das Gelenk (40) der Hülle integral ausgebildet sind.

3. Vorrichtung nach Anspruch 1 oder 2, dadurch gekennzeichnet, daß die lösbaren Schließeinrichtungen auf einem Flügel einen Stift (42a) und auf dem anderen Flügel einen hiermit zusammenwirkenden Bund (42b) aufweisen.

4. Vorrichtung nach Anspruch 1, 2 oder 3, dadurch gekennzeichnet, daß die lösbaren Schließeinrichtungen an vier Stellen um den Hüllenumfang herum vorgesehen sind.

5. Verfahren zum Reinigen der Antriebsköpfe von flexiblen Mikroplatten, in welchem eine austauschbare Platte aus reinigendem Material sandwichartig zwischen zwei Flügel aus einem Werkstoff gelegt wird, welche zur Ausbildung einer Hülle schwenkbar angelenkt sind, und die die Platte enthaltende Hülle in einen Plattenantrieb eingeschoben wird, wodurch ermöglicht ist, daß die Platte den Antriebskopf durch eine Öffnung in einem der Flügel reinigt, dadurch gekennzeichnet, daß die Hülle über das Gelenk zu öffnen ist und daß lösbare Befestigungseinrichtungen auf Innenflächen der Hülle an den Umfang der Hülle angrenzend und außerhalb des Bereiches der Reinigungsplatte zum Sichern der Hülle in einer geschlossenen Stellung vorgesehen werden.


**Revendications**

1. Dispositif de nettoyage de têtes de microdisquettes, comportant deux moitiés (38a, 38b) de matière articulées de manière pivotante pour former une coquille (38) et un disque remplaçable en une matière de nettoyage qui est placé entre les moitiés, au moins l'une des moitiés présentant une ouverture (16) à travers laquelle une tête de disquette peut venir en contact avec un disque de nettoyage lorsque la coquille contenant le disque de nettoyage est insérée dans l'entraînement de la disquette, caractérisé en ce que la coquille peut être ouverte autour de l'articulation (40) et en ce que des moyens (42a,42b) de fixation séparable sont prévus sur les surfaces intérieures de la coquille, en adjacence au contour de la coquille et à l'extérieur de la zone du disque de nettoyage, pour fixer la coquille dans une position fermée.

2. Dispositif selon la revendication 1, caractérisé en ce que les moitiés (38a, 38b) et l'articulation (40) de la coquille sont d'une seule pièce.

3. Dispositif tel que revendiqué dans la revendication 1 ou 2, caractérisé en ce que les moyens de fixation libérable comportent un ergot (42a) sur une moitié et un collet élastique coopérant (42b) sur l'autre moitié.

4. Dispositif tel que revendiqué dans la revendication 1,2 ou 3, caractérisé en ce que lesdits moyens de fixation libérable sont prévus en quatre points sur le contour de la coquille.

5. Un procédé de nettoyage de têtes de microdisquettes, dans lequel un disque remplaçable en une matière de nettoyage est placé entre deux moitiés de matière qui sont articulées de manière pivotante pour former une coquille, et la coquille contenant le disque est insérée dans un entraînement de la disquette, de sorte que le disque peut nettoyer la tête à travers une ouverture ménagée dans l'une des moitiés, caractérisé en ce que la coquille peut être ouverte autour de l'articulation et en ce que des moyens de fixation séparable sont prévus sur les surfaces intérieures de la coquille, en adjacence au contour de la coquille et à l'extérieur de la zone du disque de nettoyage, pour fixer la coquille dans une position fermée.

FIG.1

FIG.2